# FASCICULE DE BREVET EUROPEEN

(11) **EP 2 873 402 B1**
(45) Date de publication et mention de la délivrance du brevet: **27.07.2016**
(21) Numéro de dépôt: 14290328.5
(22) Date de dépôt: 31.10.2014
(51) Int. Cl.: A61G 7/10, B66C 1/36, F16B 45/04

(54) **Système d'accroche et de verrouillage automatique de boucles de sangles de transfert de patients**
Automatisches Einhak- und Verriegelungssystem der Hebeschlaufen zum Transfer von Patienten
System for automatic fastening and locking of patient transfer gripper buckles

(30) Priorité: 18.11.2013 FR 1302642
(43) Date de publication de la demande: 20.05.2015
(73) Titulaire: Scaleo Medical, 34090 Montpellier (FR)
(72) Inventeur: Merlin, David, 34090 Montpellier (FR)
(74) Mandataire: Gosse, Michel

(56) Documents cités:
- EP-A1- 1 444 971
- EP-A2- 1 169 989
- WO-A1-95/32914
- GB-A- 389 991

## Description

### DOMAINE DE L'INVENTION

La présente invention concerne un système d'accroche et de verrouillage automatique de boucles de sangles sur des barres de préhension pour lève-personnes, fixes ou mobiles, destinés au transfert de patients ;
ledit système étant constitué de dispositifs qui sont associés, chacun, à une boucle de sangle et qui sont solidarisés à la barre de préhension correspondante ;
ladite barre de préhension pouvant être des types à barres simples, ou à géométrie variable, manuelle ou mécanisée, à 2, 3 ou 4 points d'accroche ;
le transfert des patients se faisant d'un lieu à un autre comme, par exemple, un lit, un fauteuil, les toilettes, une table d'opération, etc.

### EXPOSE DE L'ARRIERE PLAN TECHNOLOGIQUE

La technique antérieure ne propose pas de dispositif de verrouillage automatique de boucles de sangles (ou hamais) sur des barre de préhension.

Elle ne propose que des dispositifs :
- soit qui ne comportent aucun moyen de verrouillage de l'ouverture de passage de la boucle de sangle ;
- soit qui comportent un moyen de verrouillage manuel.

Dans le premier cas, la boucle de sangle peut se libérer seule au cours de transferts ponctués par des pauses pendant lesquelles aucune tension n'est exercée sur une ou plusieurs boucles de sangles.

Dans le deuxième cas, le dispositif de verrouillage manuel de chaque boucle de sangle peut être actionné par le patient au cours des transferts ce qui nous ramène au cas précédent.

De tels dispositifs présentent donc des risques de chutes pour les patients au cours des transferts successifs

### RESUME DE L'INVENTION

L'invention vise à proposer un système du genre en question qui ne présente pas les inconvénients susmentionnés et qui est capable d'assurer, dans des conditions de sécurité optimales, la fonction de verrouillage automatique des boucles de sangles. L'invention se caractérise essentiellement en ce que chaque dispositif est constitué :
- d'un crochet solidarisé en un point distinct de la barre de préhension et pourvu d'une ouverture aménagée pour le passage de la boucle de sangle correspondante ;
- d'une bague de sécurité conçue pour coulisser sur ledit crochet et pourvue d'une ouverture aménagée également pour le passage de la boucle de sangle correspondante ;
en ce que l'ouverture de la bague de sécurité est, lorsque le dispositif de verrouillage est en position « ouvert », positionnée en regard de l'ouverture du crochet auquel elle est associée, de manière à laisser passer la boucle de sangle ;
en ce que l'ouverture du crochet concerné, est, lorsque le dispositif de verrouillage est en position « fermé », obturée par la partie du corps de la bague de sécurité qui lui est associée ;
et en ce que le passage de la position « dispositif ouvert » à « dispositif fermé » est réalisé au moyen de la boucle de sangle qui fait coulisser la bague de sécurité concernée sous le seul effet du poids du patient et qui la maintient dans la position de verrouillage, c'est-à-dire ouverture du crochet obturée par le corps de ladite bague, et ce tant que le poids du patient est actif sur chaque boucle de sangle.

Elle se caractérise également en ce que :
- l'un des deux crochets est conçu pour être fixé en partie supérieure de la barre de préhension et est pourvu d'une extension qui part de la base de celui-ci et qui s'étend jusqu'à son ouverture ;
- l'autre crochet est conçu pour être fixé en partie inférieure de la barre de préhension et est pourvu d'une extension qui part du sommet de celui-ci et qui s'étend jusqu'à son ouverture ;
- la bague de sécurité est identique pour chacun desdits crochets ;
- un moyen additionnel d'indexage, sécurisant le verrouillage dudit dispositif en l'absence de tension, constitué de deux billes diamétralement opposées et d'un ressort logés dans un trou diamétral, débouchant, pratiqué dans la base du crochet et d'une rainure périphérique pratiquée, en regard desdites billes, à l'intérieur de la base de la bague.

Une telle réalisation permet :
- l'accroche facile par le personnel soignant des boucles de la sangle, ainsi que leur verrouillage à l'aide d'une seule main ;
- la sécurité complète du système de verrouillage de sorte que Je poids du patient qui maintient les boucles en tension, appuie sur la bague de fermeture qui obstrué l'ouverture du crochet et empêche la sangle de sortir de son logement, et ceci sans intervention manuelle.
- grâce au moyen complémentaire d'indexage, de sécuriser le verrouillage en l'absence de tension.

Le verrouillage est permanent pendant le transfert du patient et ce tant que le patient est soutenu par la sangle.

Le déverrouillage du système ne peut s'effectuer que lorsque le patient n'est plus dans la sangle et que les boucles ne sont plus en tension.

Dans ce cas, il est possible d'actionner le dispositif d'indexage qui libère la boucle de la sangle.

### PRESENTATION DES FIGURES

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :

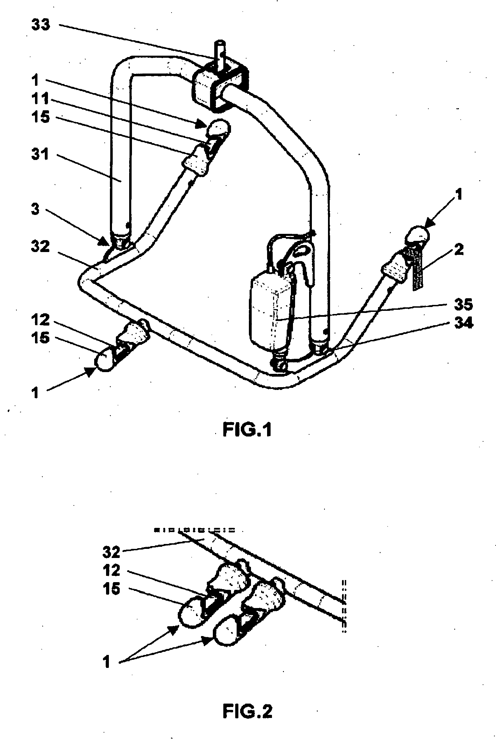

- la figure 1 représente, en perspective, une vue d'ensemble d'une barre de préhension articulée pourvue de 3 points de fixation, deux hauts et un bas, des dispositifs selon l'invention ;
- la figure 2 représente, en perspective, une vue partielle de la barre de préhension montrant le doublement du point de fixation bas ;

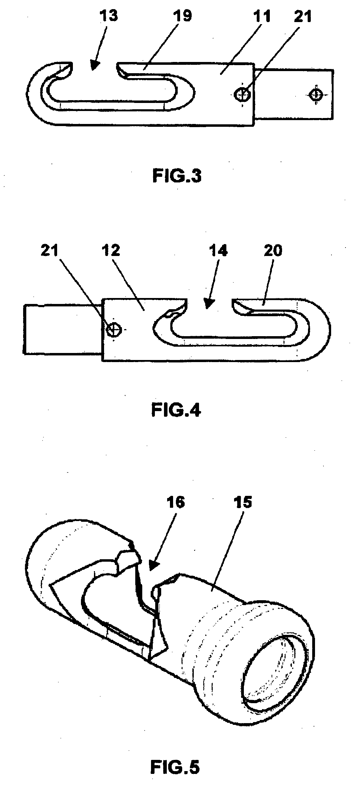

- la figure 3 représente, en vue de profil, le crochet haut selon l'invention ;
- la figure 4 représente, en vue de profil, le crochet bas selon l'invention ;
- la figure 5 représente, en perspective, la bague selon l'invention ;

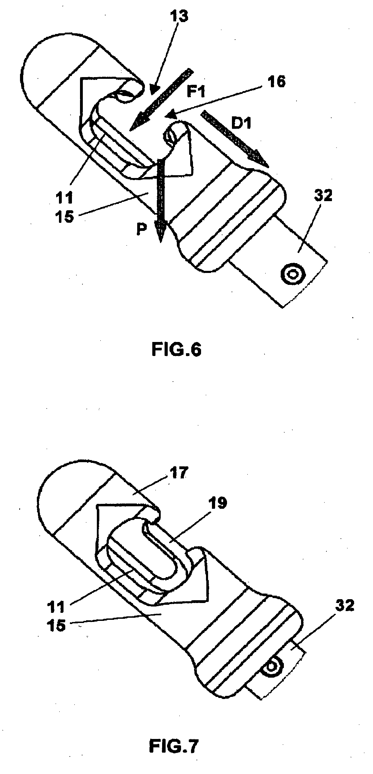

- la figure 6 représente, en perspective, le dispositif haut en position « ouvert » ;
- la figure 7 représente, en perspective, le dispositif haut en position « fermé » ;

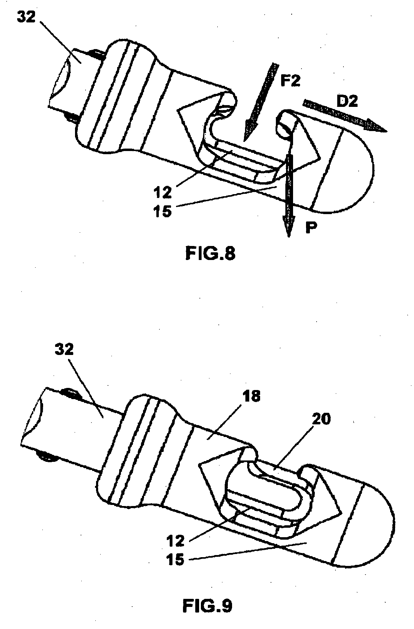

- la figure 8 représente, en perspective, le dispositif bas en position « ouvert » ;
- la figure 9 représente, en perspective, le dispositif bas en position « fermé » ;

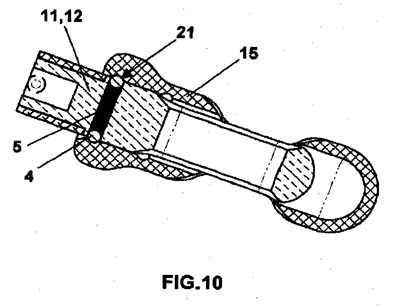

- la figure 10 représente, en coupe longitudinale, le dispositif montrant le moyen additionnel d'indexage.

### DESCRIPTION DETAILLEE DE L'INVENTION

Le système représenté aux figures est destiné à l'accroche et au verrouillage automatique de boucles de sangles sur des barre de préhension pour lève-personnes, fixes ou mobiles, destinés au transfert de patients; ledit système étant constitué de dispositifs (1) associés, chacun, à une boucle de sangle (2) et solidarisés à la barre de préhension (3).

Selon les caractéristiques essentielles de l'invention :
a) chaque dispositif (1) est constitué :
   - d'un crochet (11,12) solidarisé en un point distinct de la barre de préhension (3) et pourvu d'une ouverture (13,14) aménagée pour le passage de la boucle de sangle (2) correspondante ;
   - d'une bague de sécurité (15) conçue pour coulisser sur ledit crochet et pourvue d'une ouverture (16) aménagée également pour le passage de la boucle de sangle (2) correspondante ;
b) le crochet (11,12) et la bague (15) sont dimensionnés pour que :
   - l'ouverture (16) de la bague de sécurité (15) est, lorsque le dispositif de verrouillage est en position « ouvert », positionnée en regard de l'ouverture (13,14) du crochet (11,12) auquel elle est associée, de manière à laisser passer la boucle de sangle (2) ;
   - l'ouverture (13,14) du crochet (11,12) concerné, est, lorsque le dispositif de verrouillage est en position « fermé », obturée par la partie (17,18) du corps de la bague de sécurité (15) qui lui est associée ;
   - le passage de la position « dispositif ouvert » à « dispositif fermé » est réalisé au moyen de la boucle de sangle (2) qui est introduite selon la flèche F1 ou F2 et qui fait coulisser, selon la flèche D1 ou D2, la bague de sécurité (15) concernée sous le seul effet du poids P du patient et qui la maintient dans la position de verrouillage, c'est-à-dire ouverture (13,14) du crochet (11,12) obturée par le corps de ladite bague, et ce tant que le poids du patient est actif sur chaque boucle de sangle (2).

Selon des particularités de réalisation de l'invention :
- l'un (11) des deux crochets (11,12) est conçu pour être fixé en partie supérieure de la barre de préhension (3) et est pourvu d'une extension (19) qui part de la base de celui-ci et qui s'étend jusqu'à son ouverture (13) ;
- l'autre (12) des deux crochets (11,12) est conçu pour être fixé en partie inférieure de la barre de préhension (3) et est pourvu d'une extension (20) qui part du sommet de celui-ci et qui s'étend jusqu'à son ouverture (14) ;
- la bague de sécurité (15) est identique pour chacun des crochets (11) et (12).

Le dispositif (1) comporte un moyen additionnel d'indexage, sécurisant le verrouillage dudit dispositif en l'absence de tension, constitué de deux billes (4) diamétralement opposées et d'un ressort (5) logés dans un trou diamétral, débouchant, pratiqué dans la base du crochet (11,12) et d'une rainure périphérique (21) pratiquée, en regard desdites billes, à l'intérieur de la base de la bague (15).

Il y a plusieurs types de dispositifs :
a) lorsqu'il est à géométrie variable, la barre de préhension se compose de deux parties :
   - l'une (31), supérieure, qui est pourvue d'un axe de barre de préhension (33) à un dispositif porteur, fixe ou mobile ;
   - l'autre (32), inférieure, sur laquelle sont fixés les crochets (11) et (12) des dispositifs de verrouillage (1) et qui est articulée par rapport à la première partie au moyen d'une articulation (34) et actionnée par un vérin (35) lorsqu'elle est mécanisée ;
b) lorsqu'il est rigide, la barre de préhension peut être composée de 2 ou de 4 points de fixation qui sont donc pourvus de 2 ou 4 dispositifs inférieurs.

Bien entendu, l'homme de métier sera apte à réaliser l'invention telle que décrite et représentée en appliquant et en adaptant des moyens connus sans qu'il soit nécessaire de les décrire ou de les représenter.
Il pourra également prévoir d'autres variantes sans pour cela sortir du cadre de l'invention tel que déterminé par la teneur des revendications.

## Revendications

1. Système d'accroche et de verrouillage automatique de boucles de sangles sur des barres de préhensions pour lève-personnes, fixes ou mobiles, destinés au transfert de patients ; ledit système étant constitué de dispositifs (1) associés, chacun, à une boucle de sangle (2) et solidarisés à la barre de préhension (3) ;
**caractérisé en ce que** chaque dispositif (1) est constitué :
- d'un crochet (11,12) solidarisé en un point distinct de la barre de préhension (3) et pourvu d'une ouverture (13,14) aménagée pour le passage de la boucle de sangle (2) correspondante;
- d'une bague de sécurité (15) conçue pour coulisser sur ledit crochet et pourvue d'une ouverture (16) aménagée également pour le passage de la boucle de sangle (2) correspondante ;
**en ce que** l'ouverture (16) de la bague de sécurité (15) est, lorsque le dispositif de verrouillage est en position « ouvert », positionnée en regard de l'ouverture (13,14) du crochet (11,12) auquel elle est associée, de manière à laisser passer la boucle de sangle (2) ;
**en ce que** l'ouverture (13,14) du crochet (11,12) concerné, est, lorsque le dispositif de verrouillage est en position « fermé », obturée par la partie (17,18) du corps de la bague de sécurité (15) qui lui est associée ;
et **en ce que** le passage de la position « dispositif ouvert » à « dispositif fermé » est réalisé au moyen de la boucle de sangle (2) qui fait coulisser la bague de sécurité (15) concernée sous le seul effet du poids du patient et qui la maintient dans la position de verrouillage, c'est-à-dire ouverture (13,14) du crochet (11,12) obturée par le corps de ladite bague, et ce tant que le poids du patient est actif sur chaque boucle de sangle (2).

2. Système, selon la revendication 1, **caractérisé en ce que** l'un (11) des deux crochets (11,12) est conçu pour être fixé en partie supérieure de la barre de préhension (3) et est pourvu d'une extension (19) qui part de la base de celui-ci et qui s'étend jusqu'à son ouverture (13).

3. Système, selon la revendication 1, **caractérisé en ce que** l'un (12) des deux crochets (11,12) est conçu pour être fixé en partie inférieure de la barre de préhension (3) et est pourvu d'une extension (20) qui part du sommet de celui-ci et qui s'étend jusqu'à son ouverture (14).

4. Système, selon les revendications 2 et 3, **caractérisé en ce que** la bague de sécurité (15) est identique pour chacun des crochets (11) et (12).

5. Système, selon la revendication 1, **caractérisé en ce que** le dispositif (1) comporte un moyen additionnel d'indexage, sécurisant le verrouillage dudit dispositif en l'absence de tension, constitué de deux billes (4) diamétralement opposées et d'un ressort (5) logés dans un trou diamétral, débouchant, pratiqué dans la base du crochet (11,12) et d'une rainure périphérique (21) pratiquée, en regard desdites billes, à l'intérieur de la base de la bague (15).

## Patentansprüche

1. Automatisches Aufhängungs- und Verriegelungssystem von Gurtschleifen auf Hubstangen von feststehenden oder mobilen Liftern, die für den Transfer von Patienten bestimmt sind; wobei das besagte System aus Vorrichtungen (1) gebildet wird, die jeweils einer Gurtschleife (2) zugeordnet sind, und fest mit der Hubstange (3) verbunden sind;
**dadurch gekennzeichnet, dass** sich jede Vorrichtung (1) wie folgt zusammensetzt:
- aus einem Haken (11, 12), der fest mit einem Punkt verbunden ist, der von der Hubstange (3) getrennt ist und mit einer Öffnung (13, 14) versehen ist, die für den Durchlass der entsprechenden Gurtschleife (2) angeordnet ist;
- aus einem Sicherheitsring (15), der gestaltet ist, um auf dem besagten Haken zu gleiten und mit einer Öffnung (16) versehen ist, die ebenfalls für den Durchlass der entsprechenden Gurtschleife (2) angeordnet ist;
dadurch, dass die Öffnung (16) des Sicherheitsrings (15), wenn sich die Verriegelungsvorrichtung in der "offenen" Stellung befindet, gegenüber der Öffnung (13, 14) des Hakens (11, 12) angeordnet ist, dem sie zugeordnet ist, um die Gurtschleife (2) durchzulassen;
dadurch, dass die Öffnung (13, 14) des betroffenen Hakens (11, 12), wenn sich die Verriegelungsvorrichtung in der "geschlossenen" Stellung befindet, von dem Abschnitt (17, 18) des Korpus des Sicherheitsrings (15) abgedeckt wird, der ihr zugeordnet ist; und dadurch, dass der Übergang von der Stellung "Vorrichtung offen" auf "Vorrichtung geschlossen" anhand der Gurtschleife (2) durchgeführt wird, die den betroffenen Sicherheitsring (15) unter der einfachen Wirkung des Gewichts des Patienten gleiten lässt, und die ihn in der Verriegelungsposition hält, das heißt, dass die Öffnung (13, 14) des Hakens (11, 12) durch den Korpus des besagten Ringes abgedeckt ist, solange das Gewicht des Patienten auf jeder Gurtschleife (2) aktiv ist.

2. System nach Anspruch 1, **dadurch gekennzeichnet, dass** der eine (11) der beiden Haken (11, 12) gestaltet ist, um im oberen Abschnitt der Hubstange (3) befestigt zu werden, und mit einer Verlängerung (19) versehen ist, die von der Basis desselben ausgeht und sich bis zu seiner Öffnung (13) erstreckt.

3. System nach Anspruch 1, **dadurch gekennzeichnet, dass** der eine (12) der beiden Haken (11, 12) gestaltet ist, um im unteren Abschnitt der Hubstange (3) befestigt zu werden, und mit einer Verlängerung (20) versehen ist, die vom Scheitelpunkt desselben ausgeht und sich bis zu seiner Öffnung (14) erstreckt.

4. System nach den Ansprüchen 2 und 3, **dadurch gekennzeichnet, dass** der Sicherheitsring (15) für jeden der Haken (11) und (12) identisch ist.

5. System nach Anspruch 1, **dadurch gekennzeichnet, dass** die Vorrichtung (1) ein zusätzliches Indexiermittel umfasst, das die Verriegelung der besagten Vorrichtung bei fehlender Spannung sichert, bestehend aus zwei diametral gegenüberliegenden Kugeln (4) und einer Feder (5), die in einem diametralen Durchgangsloch angeordnet sind, das in der Basis des Hakens (11, 12) ausgeführt ist, und aus einer umlaufenden Nut (21), die gegenüber den besagten Kugeln im Inneren der Basis des Ringes (15) eingearbeitet ist.

## Claims

1. System for automatic fastening and locking of gripper buckles on gripping bars for patient lift, fixed or mobile, intended for the transfer of patients; said system being constituted of devices (1) each associated with a gripper buckle (2) and integral with the gripping bar (3);
**characterised in that** each device (1) is constituted:
- of a hook (11, 12) integral at a separate point of the gripping bar (3) et provided with an opening (13, 14) arranged for the passage of the corresponding gripper buckle (2);
- of a safety ring (15) designed to slide on said hook and provided with an opening (16) also arranged for the passing of the corresponding gripper buckle (2);
**in that** the opening (16) of the safety ring (15) is, when the locking device is in "open" position, positioned facing the opening (13, 14) of the hook (11, 12) to which it is associated, in such a way as to allow the gripper buckle (2) to pass;
**in that** the opening (13, 14) of the hook (11, 12) concerned, is, when the locking device is in "closed" position, closed off by the portion (17, 18) of the body of the safety ring (15) that is associated to it;
and **in that** the passing from the "open device" to "closed device" position is carried out by means of the gripper buckle (2) which slides the safety ring (15) concerned under the sole effect of the weight of the patient et which maintains it in the locking position, i.e. opening (13, 14) of the hook (11, 12) closed off by the body of said ring, and this as long as the weight of the patient is active on each gripper buckle (2).

2. System, according to claim 1, **characterised in that** one (11) of the two hooks (11, 12) is designed to be fixed in the upper portion of the gripping bar (3) and is provided with an extension (19) that starts from the base of the latter and which extends until its opening (13).

3. System, according to claim 1, **characterised in that** one (12) of the two hooks (11, 12) is designed to be fixed in the lower portion of the gripping bar (3) and is provided with an extension (20) that starts from the top of the latter and which extends to its opening (14).

4. System, according to claims 2 and 3, **characterised in that** the safety ring (15) is identical for each one of the hooks (11) and (12).

5. System, according to claim 1, **characterised in that** the device (1) comprises an additional means of indexing, securing the locking of said device in the absence of tension, constituted of two diametrically opposite balls (4) and of a spring (5) housed in a diametral through hole, made in the base of the hook (11, 12) and of a peripheral groove (21) made, facing said balls, inside the base of the ring (15).
